# EUROPEAN PATENT SPECIFICATION

(11) **EP 1 577 582 B1**
(45) Date of publication and mention of the grant of the patent: **23.04.2014**
(21) Application number: 03768375.2
(22) Date of filing: 26.12.2003
(51) Int. Cl.: F16H 3/66

(54) **AUTOMATIC TRANSMISSION**
AUTOMATISCHES GETRIEBE
SELECTEUR DE VITESSE AUTOMATIQUE

(30) Priority: 27.12.2002 JP 2002379261
(43) Date of publication of application: 21.09.2005
(73) Proprietor: AISIN AW CO., LTD., Anjo-shi, Aichi-ken 444-1192 (JP)
(72) Inventor: KAYAMA, Kazumichi, Anjo-shi Aichi -ken 444-1192 (JP); SUGIURA, Nobutada, Anjo-shi Aichi-ken 444-1192 (JP); YAMAGUCHI, Shundo, Anjo-shi Aichi-ken 444-1192 (JP); ARAI, Takeo, Anjo-shi Aichi-ken 444-1192 (JP); INAGAKI, Tomochika, Anjo-shi Aichi-ken 444-1192 (JP)
(74) Representative: Vossius & Partner
(86) International application number: PCT/JP2003/017068
(87) International publication number: WO 2004/061331

(56) References cited:
- JP-A- 2001 082 555
- JP-A- 2001 082 555
- US-A- 5 133 697
- US-A- 5 342 257
- US-A- 5 525 117
- US-A1- 2002 091 032
- US-A1- 2002 142 880
- US-B1- 6 176 802

## Description

### Technical Field

The present invention relates to an automatic transmission mounted on a vehicle and so forth, and more specifically, it relates to the construction configuration of an automatic transmission wherein multiple speed levels are made possible by enabling inputting reduced rotation into one of the rotation components of a planetary gear unit.

### Background Art

US 5133697 discloses the preamble of claim 1.

Generally, there is known an automatic transmission incorporated in a vehicle or the like which comprises a planetary gear unit with two rows of linked planetary gears, and planetary gears that can output reduced rotation wherein the rotation speed of the input shaft is reduced (for example, see Japanese Unexamined Patent Application Publication No. 4-125345). This achieves, for example, six forward speeds and one reverse speed, by enabling input of reduced rotation from the planetary gear via a clutch to, for example, one rotation component of a planetary gear unit that has four rotation components. Further, in the case of fourth speed forward, for example, when the rotation of the input shaft is input together into two of the rotation components of the planetary gear unit, this fourth speed forward can be become directly coupled, with rotations the same as the input shaft.

The above-described automatic transmission comprises two clutches for inputting the rotation of the input shaft into two of the rotation components of the aforementioned planetary gear unit, and a planetary gear for outputting the reduced rotation into the rotation components of this planetary gear unit. However, in the event that those two clutches or the oil servos that control the engaging of those clutches are configured between the planetary gear unit and the planetary gear, the member for transmitting the reduced rotation of this planetary gear to the rotation components of the planetary gear unit becomes long in the axial direction.

The unit that transmits the reduced rotation becoming long means that the unit transmitting a large torque is elongated, and an elongated member that can withstand the large torque requires providing a relatively thick material that is elongated, preventing a compact automatic transmission. Further, the weight of such a member would be heavier, and not only would a lightweight automatic transmission be prevented, but inertia (force of inertia) would increase, reducing the controllability of the automatic transmission and shock of speed change would result more easily.

Further, for example, in order to engage or disengage the reduced rotation output to the planetary gear unit from the planetary gear, a clutch or brake must be provided. In the case that a clutch is provided, this clutch and the above-described two clutches, in other words three clutches, are necessary. In general, a clutch has a drum-shaped member (clutch drum) that transmits the input rotation to the friction plates, and therefore, for example with a problem such as relative rotation, supplying oil pressure to the oil compartment of the oil pressure servo of the clutch must be supplied from the mid-section of the automatic transmission.

However, if those three clutches are configured on one side in the direction of the axis of the planetary gear unit for example, oil lines for supplying oil pressure to three oil pressure servos are constructed in triplicate in the mid-section of the automatic transmission for example, and the configuration of the oil lines become complicated.

Accordingly, the object of the present invention is to provide an automatic transmission with a first clutch that is located between the planetary gear and input shaft and the input rotation components, and a brake that is capable of fixing the rotation fixing components, on one side of the planetary gear unit in the axial direction, and with a second clutch and a third clutch on the other side of the planetary gear unit in the axial direction, and hence solve the problems mentioned above.

### Disclosure of Invention

The present invention according to Claim 1 is an automatic transmission comprising: an input shaft that rotates based on the output rotation of a drive source; a reducing planetary gear comprising an input rotation component that can input the rotation of the input shaft, a rotation fixing component that fixes the rotation, a reduced rotation component that can reduce rotation speed based on the rotation of the input rotation component and the rotation fixing component; engaging means for operating the rotation of the input rotation component or the rotation of the rotation fixing component; a planetary gear unit comprising a first rotation component and a second rotation component and a third rotation component and a fourth rotation component for inputting the reduced rotation of the reduced rotation components; a first clutch for linking the input shaft and the second rotation component so as to be capable of disengaging; a second clutch for linking the input shaft and the third rotation component so as to be capable of disengaging; and an output member for outputting the rotation of the fourth rotation component into the drive wheel transmitting device, wherein; at least five forward speeds and one reverse speed can be achieved, and the first clutch and the second clutch can be engaged together while at fourth speed forward; and wherein the planetary gear and the engaging means are configured on one side in the axial direction of the planetary gear unit; and wherein the first clutch and the second clutch are configured on the other side in the axial direction of the planetary gear unit; and wherein the output member is disposed between the planetary gear unit and the reducing planetary gear and the engaging means.

Accordingly, an automatic transmission can be provided that will achieve at least five forward speeds and one reverse speed with direct coupling at fourth speed forward, while for example, compared to the case wherein two clutches are configured between the planetary gear and the planetary gear unit, the planetary gear and the planetary gear unit can be configured close together, and the transmitting member for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, due to the output unit being configured in the axial direction between the planetary gear unit and the reducing planetary gear and the engaging means, the output unit can be configured in approximately the center in the axial direction of the automatic transmission. For example, when the automatic transmission is mounted on the vehicle, increase in size towards one direction of the axis (particularly in the rear direction when the input side from the drive source is the front direction) can be prevented because the output unit is mounted to match the drive wheel transmission mechanism. Because of this, particularly in the case of an FF vehicle, the interference toward the front wheels is reduced, and the mountability on a vehicle can be improved, such the steering angle being greatly improved, for example.

The present invention according to Claim 1 is configured such that the engaging means is a first brake capable of fixing the rotation fixing component.

The present invention according to Claim 6 is configured comprising: a linking unit for linking the reduced rotation component and the first rotation component; wherein the third clutch is configured on the inner circumference side of the linking unit.

The present invention according to Claim 3 is configured with the first brake configured on the opposite sidein the axial direction of the planetary gear unit of the reducing planetary gear; wherein the oil pressure servo of the first brake is provided to the case.

The present invention according to Claim 4 is configured comprising a second brake capable of fixing the first rotation component wherein the reduced rotation is input; wherein the first brake and the second brake each comprise a friction member and an oil pressure servo for pressing the friction member; and wherein the oil pressure servo of the first brake is configured on the inner circumference side in the radial direction of the oil pressure servo of the second brake, and the friction member of the first brake meshes with a member extended from between the oil pressure servo of the first brake and the oil pressure servo of the second brake.

The present invention according to Claim 1 is configured comprising a second brake capable of fixing the first rotation component wherein the reduced rotation is input, wherein the engaging means is configured in a location so as to wrap in the radial direction on the inner circumference side of the second brake.

With the present invention according to Claim 5, the first clutch comprises a friction member, an oil pressure servo that pressurizes this friction member, a drum unit that is constructed integrally with the oil pressure servo, and a hub unit; and the drum unit is linked with the input shaft, and the hub unit is linked with the second rotation component.

The present invention according to Claim 7 further comprises a differential unit for outputting rotations to driving wheels, and a counter shaft unit for engaging the differential unit, wherein the output member is a counter gear meshing with the counter shaft unit.

The present invention according to Claim 8 is configured such that wherein, in a speed line chart illustrating the revolutions of the first, second, third, and fourth rotation components with the vertical axis, and the gear ratio of the first, second, third, and fourth rotation components with the horizontal axis in a corresponding manner; the first rotation component to which the reduced rotation is input is positioned at the farthest edge in the horizontal direction, with the third rotation component, the fourth rotation component linked to the output member, and the second rotation component, corresponding in that order.

The present invention according to Claim 9 is configured such that the planetary gear unit is a multiple type planetary gear, comprising a first sun gear, a long pinion which meshes with the first sun gear, a short pinion which meshes with the long pinion, a carrier for rotationally supporting the long pinion and the short pinion, a second sun gear meshing with the short pinion, and a ring gear meshing with the long pinion; wherein the first rotation component is the first sun gear capable, of inputting the reduced rotation of the reduced rotation output means, and which is capable of being fixed by the retaining of the second brake; and wherein the second rotation component is the second sun gear capable of inputting rotations of the input shaft by the engaging of the first clutch; and wherein the third rotation component is the carrier capable of inputting the rotations of the input shaft by the engaging of the second clutch, and which is capable of being fixed by the retaining of a third brake; and wherein the fourth rotation component is the ring gear linked to the output member.

The present invention according to Claim 10 is configured wherein, in the first speed forward, the first clutch is engaged and the third brake is retained; and wherein, in the second speed forward, the first clutch is engaged and the second brake is retained; and wherein, in the third speed forward, reduced rotation is input to the first rotation component from the reduced rotation output means, and the first clutch is engaged; and wherein, in the fourth speed forward, the first clutch and the second clutch are both engaged; and wherein, in the fifth speed forward, reduced rotation is input to the first rotation component from the reduced rotation output means, and the second clutch is engaged; and wherein, in the sixth speed forward, the second clutch is engaged and the second brake is retained; and wherein, in the first speed reverse, reduced rotation is input to the first rotation component from the reduced rotation output means, and the third brake is retained; whereby six forward speed levels and one reverse speed level can be achieved.

### Brief Description of the Drawings

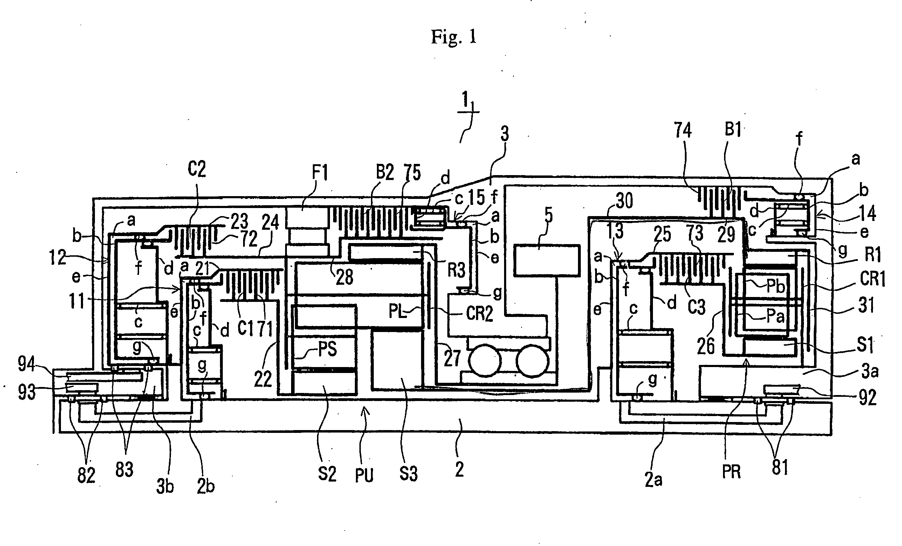

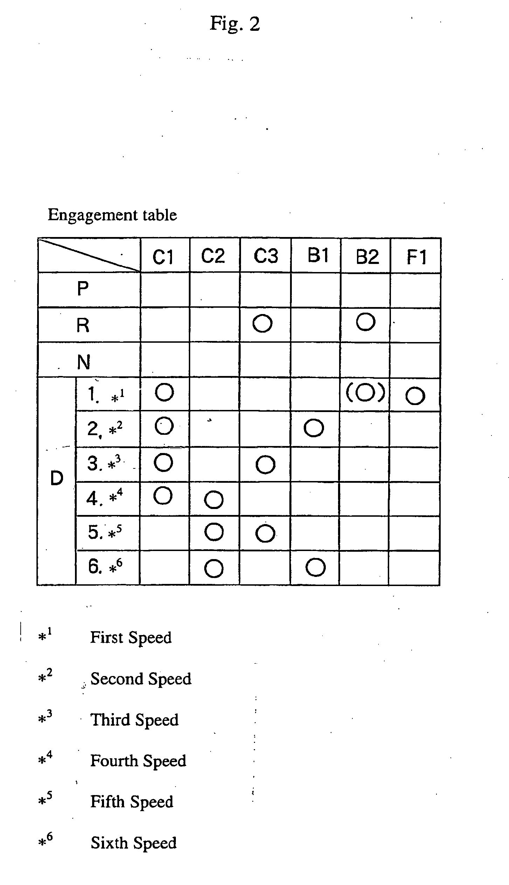

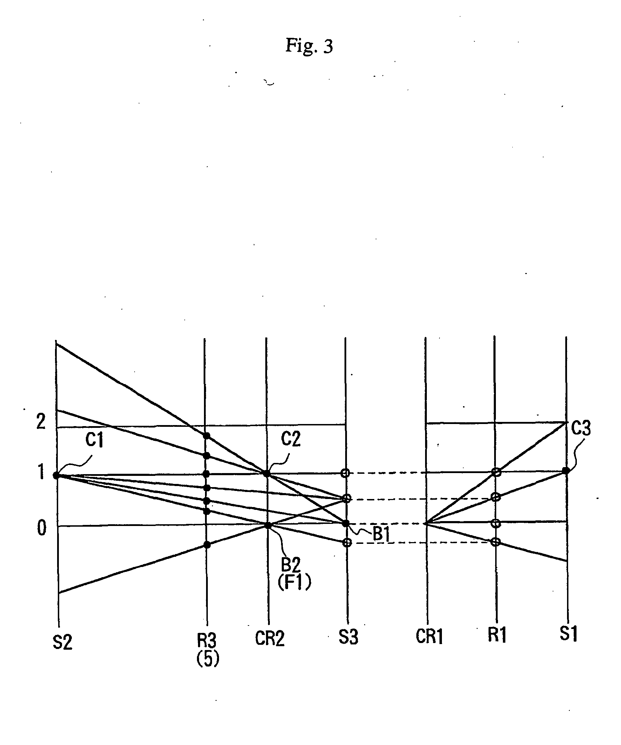

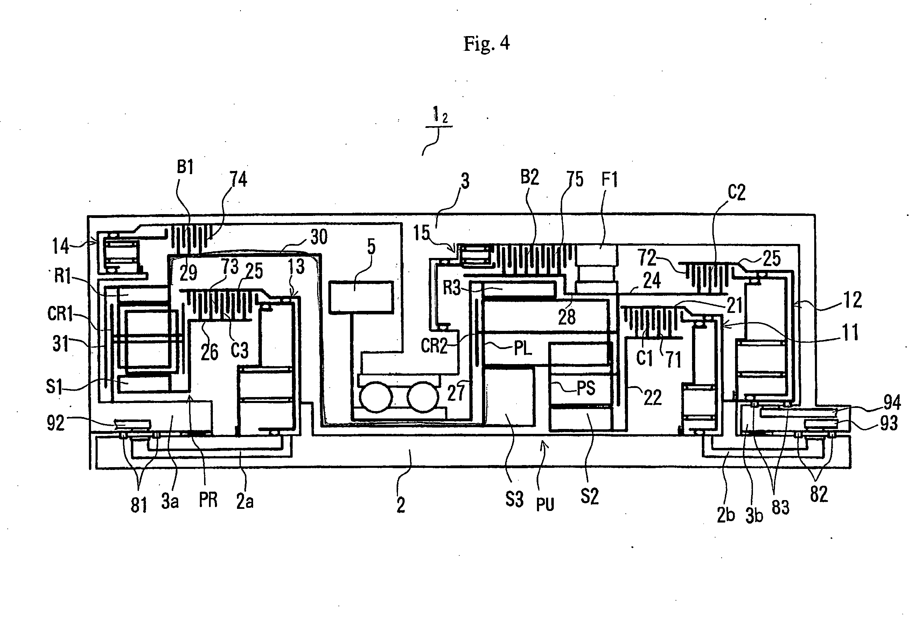

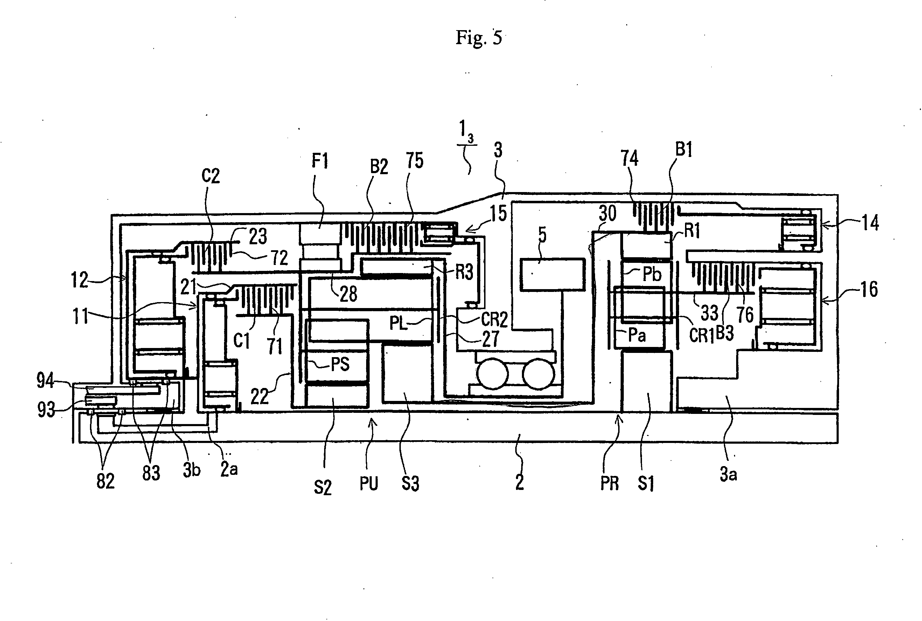

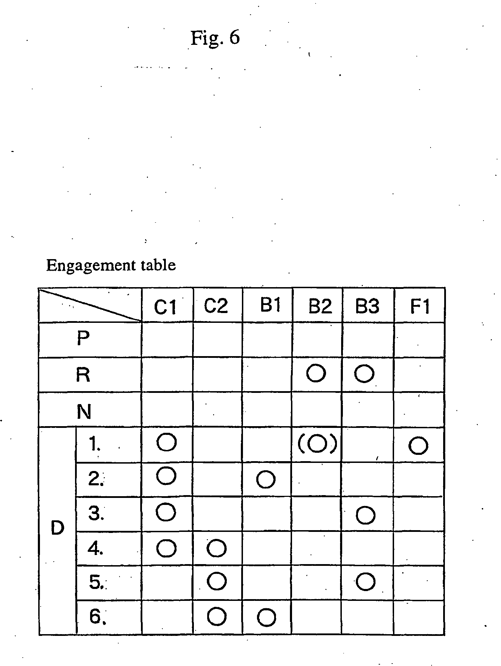

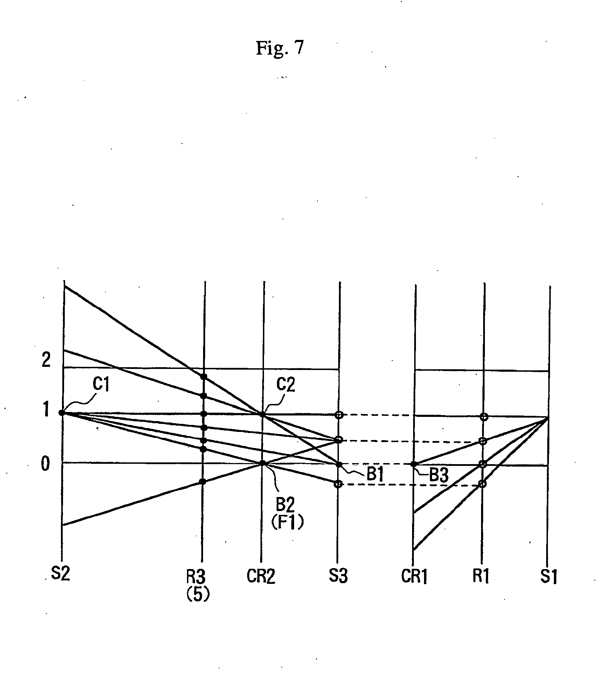

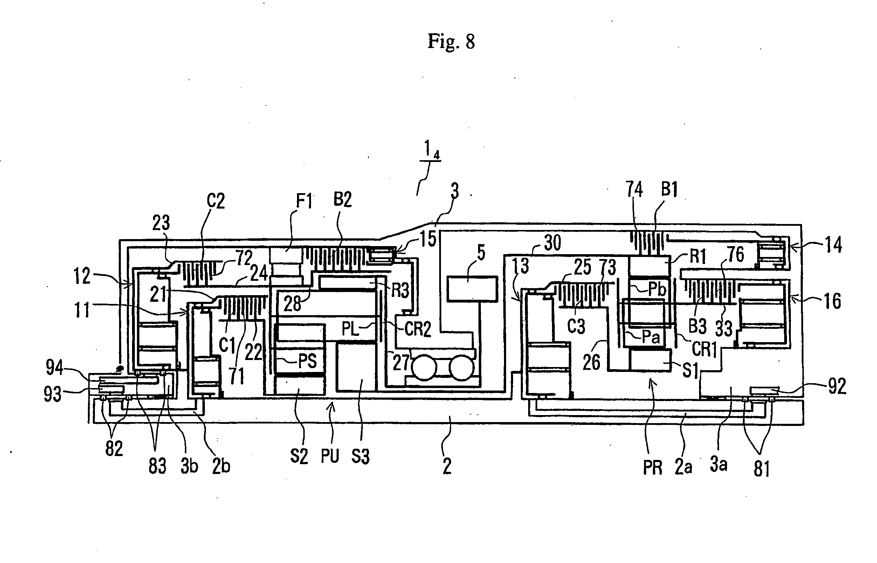

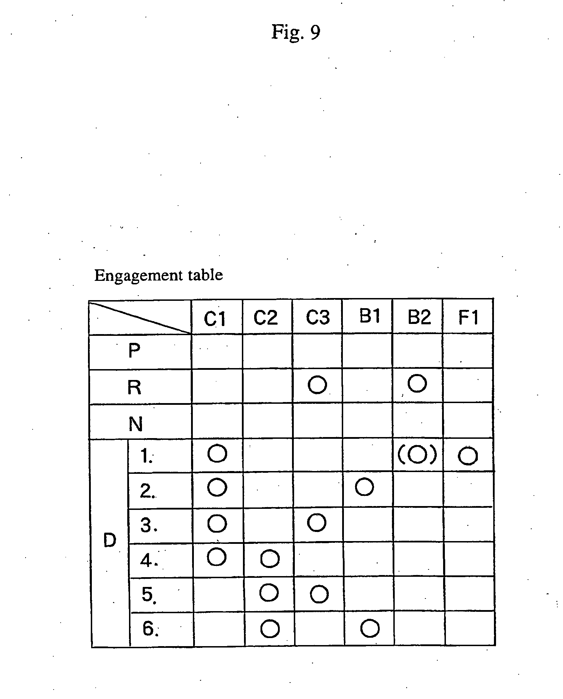

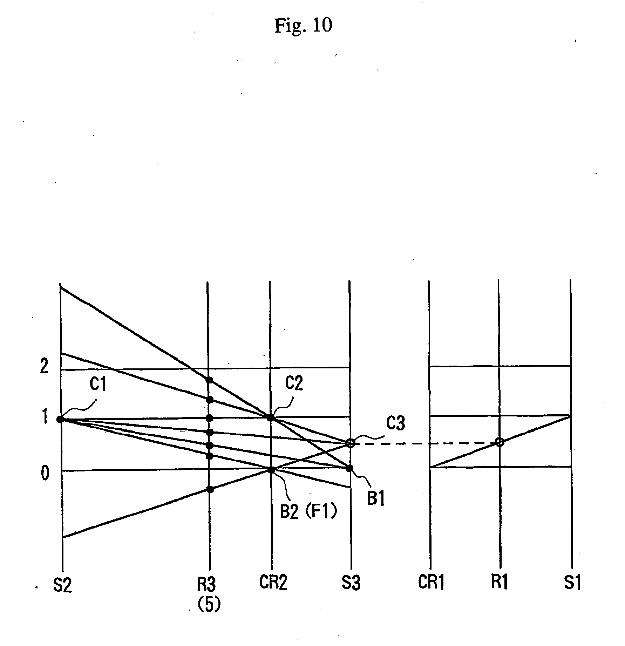

Fig. 1 is a schematic cross-sectional diagram illustrating a first not claimed automatic transmission device of an automatic transmission, Fig. 2 is a operational table of an automatic transmission relating to the first device, Fig. 3 is a speed line diagram of the first device, Fig. 4 is a schematic cross-sectional diagram illustrating a second not claimed automatic transmission device of an automatic transmission, Fig. 5 is a schematic cross-sectional diagram illustrating an automatic transmission device of an automatic transmission relating to the invention, Fig. 6 is a operational table of an automatic transmission relating to the invention, Fig. 7 is a speed line diagram of an automatic transmission relating to the invention, Fig. 8 is a schematic cross-sectional diagram illustrating an third not claimed automatic transmission device of an automatic transmission, Fig. 9 is a operational table of the third device , and Fig. 10 is a speed line diagram of the third device.

### <First device>

The first device will be described, following Fig. 1 through Fig. 3 below. Fig. 1 is a schematic cross-sectional diagram illustrating the automatic transmission device of an automatic transmission, Fig. 2 is a operational table of an automatic transmission, and Fig. 3 is a speed line diagram of an automatic transmission.

An automatic transmission has an automatic transmission device 1₁ as illustrated in Fig. 1. This is particularly favorable for an FF (front engine, front wheel drive) vehicle, and has a case comprising a housing case, not illustrated, and a transmission case 3, and within this housing case is configured a torque converter, not illustrated, within this transmission case 3 is configured an automatic transmission device 1₁, a counter shaft unit (drive wheel transmission mechanism), not illustrated, and a differential unit (drive wheel transmission mechanism).

This torque converter is configured, for example, on the axis that is centered on an input shaft 2 of the automatic transmission device 1₁, which is on the same axis as the output shaft of the engine (not illustrated), and this automatic transmission device 1₁ is configured on the output shaft of this engine, in other words, the axis that is centered on the input shaft 2. Further, the above-mentioned counter shaft unit is configured on a counter shaft (not illustrated) on an axis that is parallel to the input shaft 2, and the above-mentioned differential unit is configured so as to has a lateral axle, not illustrated, on an axis that is parallel to this counter shaft.

Next, the automatic transmission device 1₁ of the automatic transmission relating to the first embodiment will be described, with reference to Fig. 1. As illustrated in Fig. 1, the automatic transmission device 1₁ comprises a planetary gear unit PU and a planetary gear PR on the input shaft 2. This planetary gear unit PU is a multiple-type planetary gear, which has a sun gear S2 (the second rotation component), a carrier CR2 (the third rotation component), a ring gear R3 (the fourth rotation component), and a sun gear S3 (the first rotation component), as the four rotation components; wherein the carrier CR2 has a long pinion PL that meshes with a sun gear S3 and a ring gear R3, and a short pinion PS that meshes with a sun gear S2, which are meshed to one another. Further, the above-mentioned planetary gear PR is a double planetary gear that has a carrier (rotation fixing component) CR1, wherein a pinion Pb meshes with a ring gear (reduced rotation component) R1 and a pinion Pa meshes with a sun gear (input rotation component) S1, which are meshed one to another.

On the above-mentioned input shaft 2 is configured a oil pressure servo 13, a friction plate 73, a drum-shaped member 25 that forms a clutch drum, and a multi-disc clutch C3 (the third clutch) that comprises a hub unit 26.

This oil pressure servo 13 is constructed from a piston unit b for pressurizing the friction plate 73, a drum-shaped member 25 that has a cylinder unit e, an oil chamber "a" which is formed by sealing between this piston unit b and this cylinder unit e with seal rings f and g, a return spring c that energizes this piston unit b towards this oil chamber "a", and a return plate d that absorbs the energy of this return spring c.

Now, for the following descriptions, each oil pressure servo shall be considered as being constructed similarly from an oil chamber "a", the piston unit b, the return spring c, the return plate d, the cylinder unit e, and the seal rings f and g, and as such, description thereof will be omitted.

The oil chamber "a" of this oil pressure servo 13 is connected to an oil line 2a which is formed on the input shaft 2, and this oil line 2a is provided along one edge of the case 3, and is connected to an oil line 92 of a boss unit 3a which is formed on this input shaft 2 in sleeve form. Further, this oil line 92 is connected to an oil pressure control unit, not illustrated. In other words, because the above-mentioned oil pressure servo 13 is configured on input shaft 2, an oil line from the oil pressure control unit, not illustrated, to the oil chamber "a" of the oil pressure servo 13 is constructed, simply by providing one set of seal rings 81 to seal between this boss unit 3a and the input shaft 2.

Further, the above-mentioned input shaft 2 is connected to the above-mentioned drum-shaped member 25, and on the front edge of the inner circumference side of this drum-shaped member 25 is configured the friction plate 73 of the clutch C3 which is capable of engaging by the oil pressure servo 13 for the clutch C3, by being splined, and is connected with the inner circumference side of the friction plate 73 of this clutch C3 splined to the hub unit 26. Further, this hub unit 26 is connected to the above-mentioned sun gear S1. Further, the carrier CR1 has the pinion Pa and the pinion Pb, and this pinion Pb meshes with the above-mentioned ling gear R1, and this pinion Pa meshes with the sun gear S1 which is connected to the input shaft 2. The carrier CR1 is secured to the boss unit 3a of the case 3 via a side plate, and the ring gear R1 is supported by a supporting unit 31 to the boss unit 3a so as to freely rotate.

On the outer circumference side of this ring gear R1 is configured a multi-disc brake B1 (the second brake) that comprises an oil pressure servo 14, a friction plate 74, and a hub unit 29, and on the outer circumference side of the hub unit 29 is disposed the friction plate 74 of the brake B1 which is capable being retained by the oil pressure servo 14 of the brake B1, by being splined. Also, this hub unit 29 is connected to this ring gear R1, and is also connected to a transmitting member 30 that transmits the rotation of the ring gear R1 when this clutch C3 is engaged, and on the other side of this transmitting member 30 the sun gear S3 of the above-mentioned planetary gear unit PU is connected. In other words, the ring gear R1 and the sun gear S1 are constantly in contact with one another, with no clutch located between, and the rotation can constantly be transmitted.

On the other hand, on the other edge of the input shaft 2 (left side of diagram) a multi-disc clutch C1 (the first clutch) is configured that comprises an oil pressure servo 11, a friction plate 71, a drum-shaped member 21 that forms a clutch drum, and a hub unit 22. Further, on the boss unit 3b that is elongated on the other side of the case 3 on the opposite side from the above-mentioned boss unit 3a, and is provided on the input shaft 2 in sleeve form, is configured a multi-disc clutch C2 (the second clutch) comprising an oil pressure servo 12, a friction plate 72, a drum-shaped member 23 that forms a clutch drum, and a hub unit 24.

The oil chamber "a" of this oil pressure servo 11 is linked to the oil line 2b formed on this above-mentioned input shaft 2, this oil line 2b is linked through an oil line 93 of the above-mentioned boss unit 3b, and this oil line 93 is linked through to an oil pressure control device not illustrated. In other words, the above-mentioned oil pressure servo 11 has an oil line constructed from the oil pressure control device not illustrated to the oil chamber "a" of the oil pressure servo 11, by one set of seal rings 82 that seal between the boss unit 3b of the case 3 and the input shaft 2.

The oil chamber "a" of the above-mentioned oil pressure servo 12 is linked through to an oil line 94 of the above-mentioned boss unit 3b, and this oil line 94 is linked through to the oil pressure control device, not illustrated. In other words, for the above-mentioned oil pressure servo 12, an oil line is constructed from the oil pressure control device not illustrated to the oil chamber "a" of the oil pressure servo 12, by one set of seal rings 83 that seal between the boss unit 3b of the case 3 and the drum-shaped member 23.

The drum-shaped member 21 of the above-mentioned clutch C1 is connected to the input shaft 2, and on the front edge of the inner circumference side of this drum-shaped member 21 is configured a friction plate 71 of the clutch C1 that is capable of engaging by the oil pressure servo 11 for the clutch C1, splined. On the inner circumference side of the friction plate 71 of this clutch C1 is configured a hub unit 22, splined, and this hub unit 22 is connected to the sun gear S2.

The drum-shaped member 23 of the above-mentioned clutch C2 is also connected to the input shaft 2, and on the front edge of the inner circumference side of this drum-shaped member 23 is configured a friction plate 72 of the clutch C2 that is capable of engaging by the oil pressure servo 12 for the clutch C2, by being splined. On the inner circumference side of the friction plate 72 of this clutch C2 is configured a hub unit 24 by being splined, and this hub unit 24 is connected to the carrier CR2.

On the other hand, on the outer circumference side of the planetary gear unit PU is configured a multi-disc brake B2 that has an oil pressure servo 15, a friction plate 75, and a hub unit 28. To the side plate of the carrier CR2 of this planetary gear unit PU is connected a hub unit 28 that is splined to the friction plate 75 of the above-mentioned brake B2, and further, this hub unit 28 is connected to the inner race of a one-way clutch F1. The sun gear S2 is meshed with the short pinion PS of this carrier CR2, and the above-mentioned sun gear S3 and ring gear R3 are meshed with the long pinion PL of this carrier CR2. Also, a linking unit 27 is connected to one edge of this ring gear R3, and this ring gear R3 is linked to the counter gear (output unit) 5 via this linking unit 27.

As described above, the planetary gear PR and the clutch C3 are configured on one side in the direction of the axis of the planetary gear unit PU, and also the clutch C1 and the clutch C2 are configured on the other side in the direction of the axis. Further, the counter gear 5 is configured between the planetary gear PR and the planetary gear unit PU, in the direction of the axis. Further, the brake B1 is configured on the outer circumference side of the planetary gear, and the brake B2 is configured on the outer circumference side of the planetary gear unit PU.

Continuing, based on the above-mentioned construction, the operations of the automatic transmission device 1₁ will be described, following Fig. 1, Fig. 2, and Fig. 3 below. Now, the vertical axis of the speed line diagram illustrated in Fig. 3 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 3) corresponds to sun gear S3, and hereafter moving to the left direction within the diagram, the vertical axis corresponds to the carrier CR2, the ring gear R3, and the sun gear S2. Further, regarding the planetary gear PR section of this speed line diagram, the vertical axis to the farthest horizontal edge (the right side of Fig. 3) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in a horizontal direction within the diagram illustrate that the rotation is transmitted from the transmitting member 30.

As illustrated in Fig. 1, the rotation of input shaft 2 is input to the above-mentioned sun gear S2, by engaging the clutch C1. The rotation of input shaft 2 is input to the above-mentioned carrier CR2, by engaging the clutch C2, and this carrier CR2 can fix the rotation by the retaining of brake B2, and further, the rotation in one direction is regulated by the one-way clutch F1.

On the other hand, the above-mentioned sun gear S1 is connected to the input shaft 2 by engaging the clutch C3, and the rotation of this input shaft 2 is input. Further, the above-mentioned carrier CR1 is connected to the case 3 and the rotation thereof is fixed, and then the rotation of the input shaft 2 is input to this sun gear S1, the ring gear R1 therefore rotates at a reduced speed. The reduced rotation of this ring gear R1 is input to the sun gear S3 via the transmitting member 30. Further, when the clutch C3 is not engaged, and the brake B1 is retained, the rotation of the sun gear S3 is fixed via this transmitting member 30.

Also, the rotation of the above-mentioned ring gear R3 is output to the above-mentioned counter gear 5, and is output to the drive wheel not illustrated via this counter gear 5, a counter shaft unit not illustrated, and a differential unit.

At first speed forward within the D (drive) range, as illustrated in Fig. 2, the clutch C1 and a one-way clutch F1 are engaged. Then, as illustrated in Fig. 3, the rotation of input shaft 2 is input to the sun gear S2 via the clutch C1, and the rotation of the carrier CR2 is regulated in one direction (the forward rotation direction), in other words, the carrier CR2 is prevent from rotating in the opposite direction and is fixed. Further, the rotation of input shaft 2 that is input to the sun gear S2 is output to the ring gear R3 via the fixed carrier CR2, and the forward rotation for first speed forward is output from the counter gear 5.

Now, when downshifting (when coasting), the brake B2 is retained and carrier CR2 is fixed, and the above-mentioned state of first speed forward is maintained while preventing the forward rotation of this carrier CR2. Further, at this first speed forward, the one-way clutch F1 prevents the carrier CR2 from rotation in the opposite direction and allows forward rotation, and therefore, switching from a non-running range to a running range and achieving the first speed forward can be accomplished more smoothly by the automatic engaging of the one-way clutch.

At second speed forward within the D (drive) range, as illustrated in Fig. 2, the clutch C1 is engaged and the brake B1 is retained. Then, as illustrated in Fig. 3, the rotation of input shaft 2 is input to the sun gear S2 via the clutch C1, and the sun gear S3 is fixed by retaining the brake B1. By doing so, the carrier CR2 slightly reduces rotation speed, and the rotation of input shaft 2 that was input in the sun gear S2 is output to the ring gear R3 via the carrier CR2 at this reduced rotation, and the forward rotation for second speed forward is output from the counter gear 5.

At third speed forward within the D (drive) range, as illustrated in Fig. 2, the clutch C1 and the clutch C3 are engaged. Then, as illustrated in Fig. 3, the rotation of input shaft 2 is input to the sun gear S2 via the clutch C1. Further, the rotation of input shaft 2 is input to the sun gear S1 via the clutch C3, and the ring gear R1 reduces rotation speed by the fixed carrier CR1, and the speed reduction speed rotation of this ring gear R1 is output to the sun gear S3 via the transmitting member 30. Then, the carrier CR2 has a slightly increased reduced rotation compared to the reduced rotation of this sun gear S3 because of the rotation of the input shaft 2 input to the sun gear S2 and the reduced rotation of the sun gear S3. Further, the rotation of the input shaft 2 that was input in the sun gear S2 is output to the ring gear R3 via the carrier CR2 at this reduced rotation, and the forward rotation for third speed forward is output from the counter gear 5. In this case, because the sun gear S3 and the ring gear R1 are at a reduced rotation, the above-mentioned transmitting member 30 performs a relatively large torque transmission.

At fourth speed forward within the D (drive) range, as illustrated in Fig. 2, the clutch C1 and the clutch C2 are engaged. Then, as illustrated in Fig. 3, the rotation of the input shaft 2 is input to the sun gear S2 via the clutch C1, and into the carrier CR2 via the clutch C2. Therefore, by the rotation of the input shaft 2 input to the sun gear S2 and the rotation of input shat 2 input to the carrier CR2, in other words, in the state of directly coupled rotation, the rotation of the input shaft 2 is output as is into the ring gear R3, and the forward rotation for fourth speed forward is output from the counter gear 5.

At fifth speed forward within the D (drive) range, as illustrated in Fig. 2, the clutch C2 and the clutch C3 are engaged. Then, as illustrated in Fig. 3, the rotation of the input shaft 2 is input to the carrier CR2 via the clutch C2. Further, the rotation of the input shaft 2 is input to the sun gear S1 via the clutch C3, and the ring gear R1 reduces rotation speed by the fixed carrier CR1, and the reduced rotation of this ring gear R1 is output to the sun gear S3 via the transmitting member 30. Then, overdrive rotation due to reduced rotation of the sun gear S3 and the carrier CR2 wherein the rotation of the input shaft 2 is input, is output to the ring gear R3, and the forward rotation for fifth speed forward is output from the counter gear 5. In this case, similar to the case of the above-mentioned third speed forward, because the sun gear S3 and the ring gear R1 are at a reduced rotation, the above-mentioned transmitting member 30 performs a relatively large torque transmission.

At sixth speed forward within the D (drive) range, as illustrated in Fig. 2, the clutch C2 is engaged and the brake B1 is retained. Then, as illustrated in Fig. 3, the rotation of the input shaft 2 is input to the carrier CR2 via the clutch C2, and the sun.gear S3 is fixed by retaining with the brake B2. This causes overdrive rotations (even greater than that of the above-mentioned fifth speed forward), from the rotation of the input shaft 2 input to the carrier CR2 and the fixed sun gear S3, and is output to the ring gear R3, and the forward rotation for sixth speed forward is output from the counter gear 5.

At first speed reverse within an R (reverse) range, as illustrated in Fig. 2, the clutch C3 is engaged and the brake B2 is retained. Then, as illustrated in Fig. 3, the rotation of the input shaft 2 is input to the sun gear S1 via the clutch C3, and the ring gear R1 decreases speed rotation by the fixed carrier CR1, and the reduced rotation of this ring gear R1 is output to the sun gear S3 via the transmitting member 30. Further, the carrier CR2 is fixed by retaining with the brake B2. Then, the reduced rotation of the sun gear S3 and the fixed carrier CR2 is output to the ring gear R3 as an opposite direction rotation, and the opposite direction rotation for first speed reverse is output from the counter gear 5. In this case, similar to the case of the above-mentioned third speed forward or fifth speed forward, because the sun gear S3 and the ring gear R1 are at a reduced rotation, the above-mentioned transmitting member 30 performs a relatively large torque transmission.

At the P (parking) range and the N (neutral) range, particularly the clutch C1, clutch C2, and clutch C3 are released, the transmission movement between the input shaft 2 and the counter gear 5 is disconnected, and the automatic transmission device 1₁ as a whole is in an idle state (neutral state).

Now, as illustrated in Fig. 2 and Fig. 3, at first speed forward, second speed forward, fourth speed forward, and sixth speed forward, at the planetary gear PR, the rotation of the sun gear S3 is input to the ring gear R1 via the transmitting member 30, and further, because the clutch C3 is released, as illustrated in Fig. 3, the sun gear S1 rotates based on the rotation of each speed level of this ring gear R1 and the fixed carrier CR1.

As described above, according to the automatic transmission device 1₁, the planetary gear PR and the clutch C3 are configured on one side in the axial direction of the planetary gear unit PU, and the clutch C1 and the clutch C2 are configured on the other side in the axial direction of the planetary gear unit PU, therefore an automatic transmission can be provided that will achieve six forward speeds and one reverse speed with direct coupling at fourth speed forward. For example, compared to the case wherein the clutch C1 or clutch C2 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C3 is configured on one side in the axial direction of the planetary gear unit PU, and the clutch C1 and the clutch C2 are configured on the other side in the axial direction of the planetary gear unit PU, therefore compared to the case wherein for example three clutches C1, C2, and C3 are configured on one side of the planetary gear unit PU, the construction of an oil line (for example, 2a, 2b, 92, 93, 94) to provide oil to the oil pressure servos 11, 12, and 13 for these clutches C1, C2, C3 can be made easily, and the manufacturing process can be simplified and the costs brought down.

Further, because the oil pressure servos 11 and 13 are provided on the input shaft 2, one set of seal rings 81 and 82 seal the case 3 and supply oil to the oil lines 2a, and 2b provided within input shaft 2, and therefore oil can be supplied to the oil compartment of oil pressure servos 11 and 13 without providing seal rings between, for example, the input shaft 2 and the oil pressure servos 11 and 13. Further, oil pressure servo 12 can supply oil from the boss unit 3b provided from the case 3, without passing through other units for example, in other words, can supply oil by providing one set of seal rings 83. Therefore, oil can be supplied simply by providing one set of seal rings 81 and 82, 83 each for the oil pressure servos 11, 12, and 13, and sliding resistance from the seal rings can be minimized, and therefore the efficiency of the automatic transmission can be improved.

Further, the clutch C1 is a clutch that engages at relatively slow to medium speed levels of first speed forward, second speed forward, third speed forward, and fourth speed forward, and therefore then this clutch C1 is released at fifth speed forward, sixth speed forward, or first speed reverse, which are relatively high speed levels, the hub unit 22 that connects in particular this clutch C1 and sun gear S2 rotates at a relatively high rotation or reverse rotation (see Fig. 3), and on the other hand the transmitting member 30 reduces speed rotation at fifth speed forward or first speed reverse, and there may be cases wherein the transmitting member is fixed at sixth speed forward, and the rotation difference between the hub unit 22 and the transmitting member 30 may become large. However, because this clutch C1 is located on the opposite side of the planetary gear PR via the planetary gear unit PU, the hub unit 22 and the transmitting member 30 can be configured apart, and compared with the case wherein for example those units are configured in contact with a multi-axial construction, the decreased efficiency of the automatic transmission resulting from the relative rotation occurring because of friction between those units can be prevented.

Further, since the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, in the event that the oil pressure servo 13 is configured adjoined to the planetary gear PR for example, and the hub unit 26 is made to be the cylinder unit for the oil pressure servo 13, the necessity arises to provide one set of seal rings between the hub unit 26 and the input shaft 2. However, the oil pressure servo 13 of the clutch C3 is configured on the opposite side of the friction plate 73 from the planetary gear PR in the axial direction, therefore seal rings are not provided, in other words, the number of seal rings can be reduced, sliding resistance can be reduced, and by doing so, the efficiency of the automatic transmission can be improved.

Further, the automatic transmission device 1₁ is a transmission device that is directly coupled at fourth speed forward. Therefore, at fifth speed forward and sixth speed forward, the gear ratio can be specified at a high ratio, and particularly when mounted on a vehicle, in the event that the vehicle is running at a high speed, the engine revolutions can be lowered, and this contributes to the quietness of the vehicle while running at a high speed.

In order to solve the above-described problems, proposals have been made such as those in Japanese Unexamined Patent Application Publication No. 8-68456. However, the article in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. In other words, the number of friction members on a clutch must be increased, or the size thereof increased, or the oil pressure servo for pressurizing the friction member must be made larger. Further, because a brake must be configured to retain the rotation component of the planetary gear unit, this automatic transmission was insufficient with regard to being compact in size. Therefore, it is an object of the present embodiment to provide an automatic transmission that solves the above-mentioned problems, by constructing a compact clutch and brake in the area of the reducing planetary gear.

Therefore, according to the automatic transmission device 1₁, the clutch C3 is located between the input shaft 2 and the sun gear S1, and therefore, compared to the case wherein the clutch C3 is located for example between the ring gear R1 and the sun gear S3, the burden on the clutch C3 can be decreased, and the clutch C3 can be made more compact. Further, because the friction member and oil pressure servo of the clutch C3 can be made smaller, these can be configured on the inner circumference side in the radial direction of the brake B1, and the automatic transmission can be made more compact.

### <Second Embodiment>

The second device, which is a partial modification of the first device will be described, with reference to Fig. 4. Fig. 4 is a schematic cross-sectional diagram illustrating the automatic transmission device of an automatic transmission relating to the second device. Now, components of the second device which are the same as those of the first device will be denoted with the same reference numerals, and description thereof omitted, except for partial modifications.

As Fig. 4 illustrates, the automatic transmission device 1₂ of the automatic transmission relating to the second embodiment has the input side and output side backwards from that of the automatic transmission device 1₁ of the automatic transmission of the first device (see Fig. 1). Further, the actions of the first speed forward through the sixth speed forward and the first speed reverse is similar (see Fig. 2 and Fig. 3).

As described above, according to the automatic transmission device 1₂, the planetary gear PR and the clutch C3 are configured on one side in the axial direction of the planetary gear unit PU, and the clutch C1 and the clutch C2 are configured on the other side in the axial direction.of the planetary gear unit PU, and therefore directly coupled when at fourth speed forward, and can achieve six forward speeds and one reverse speed. The planetary gear PR and the planetary gear unit PU can be configured closer together, compared to the case wherein for example the clutch C1 and the clutch C2 are configured between the planetary gear PR and the planetary gear unit PU, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C3 is configured on one side in the axial direction of the planetary gear unit PU, and the clutch C1 and the clutch C2 are configured on the other side in the axial direction of the planetary gear unit PU, therefore compared to the case wherein the three clutches C1, C2, and C3 are configured on one side of the planetary gear unit PU for example, the construction of an oil line (for example, 2a, 2b, 92, 93, 94) to provide oil to the oil pressure servos 11, 12, and 13 for these clutches C1, C2, C3 can be made easily, and the manufacturing process can be simplified and the costs brought down.

Further, because the oil pressure servos 11 and 13 are provided on the input shaft 2, one set of seal rings 81 and 82 seal the case 3 and supply oil to the oil lines 2a, and 2b provided within input shaft 2, and therefore oil can be supplied to the oil compartment of oil pressure servos 11 and 13 without providing seal rings between, for example, the input shaft 2 and the oil pressure servos 11 and 13. Further, the oil pressure servo 12 can supply oil from the boss unit 3b provided from the case 3, without passing through other units for example, in other words, can supply oil by providing one set of seal rings 83. Therefore, oil can be supplied simply by providing one set of seal rings 81 and 82, 83 each for the oil pressure servos 11, 12, and 13, and sliding resistance from the seal rings can be minimized, and therefore the efficiency of the automatic transmission can be improved.

Further, the clutch C1 is a clutch that engages at, relatively slow to medium speed levels of first speed forward, second speed forward, third speed forward, and fourth speed forward, and therefore then this clutch C1 is released at fifth speed forward, sixth speed forward, or first speed reverse, which are relatively high speed levels, the hub unit 22 that connects in particular this clutch C1 and sun gear S2 rotates at a relatively high rotation or reverse rotation (see Fig. 3), and while the transmitting member 30 reduces speed rotation at fifth speed forward or first speed reverse, and there may be cases wherein the transmitting member is fixed at sixth speed forward, and the rotation difference between the hub unit 22 and the transmitting member 30 may become large. However, because this clutch C1 is located on the opposite side of the planetary gear PR via the planetary gear unit PU, the hub unit 22 and the transmitting member 30 can be configured apart, and compared with the case wherein for example those units are configured in contact with a multi-axial construction, the decreased efficiency of the automatic transmission resulting from the relative rotation occurring because of friction between those units can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, in the event that the oil pressure servo 13 is configured adjoined to the planetary gear PR for example, and the hub unit 26 is made to be the cylinder unit for the oil pressure servo 13, the necessity arises to provide one set of seal rings between the hub unit 26 and the input shaft 2. However, the oil pressure servo 13 of the clutch C3 is configured on the opposite side of the friction plate 73 from the planetary gear PR in the axial direction, therefore seal rings are not provided, in other words, the number of seal rings can be reduced, sliding resistance can be reduced, and by doing so, the efficiency of the automatic transmission can be improved.

Further, the automatic transmission device 1₂ is a transmission device that is directly coupled at fourth speed forward. Therefore, at fifth speed forward and sixth speed forward, the gear ratio can be specified at a high ratio, and particularly when mounted on a vehicle, in the event that the vehicle is running at a high speed, the engine revolutions can be lowered, and this contributes to the quietness of the vehicle while running at a high speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. In other words, the number of friction members on a clutch must be increased, or the size thereof increased, or the oil pressure servo for pressurizing the friction member must be made larger. Further, because a brake must be configured to retain the rotation component of the planetary gear unit, this automatic transmission was insufficient with regard to being compact in size. Therefore, by constructing a compact clutch and brake in the area of the reducing planetary gear, it is an object of the present embodiment to provide an automatic transmission that solves the above-mentioned problems.

Therefore, according to the automatic transmission device 1₄, the clutch C3 is located between the input shaft 2 and the sun gear S1, and therefore, compared to the case wherein the clutch C3 is located for example between the ring gear R1 and the sun gear S3, the burden on the clutch C3 can be decreased, and the clutch C3 can be made more compact. Further, because the friction member and oil pressure servo of the clutch C3 can be made smaller, they can be configured on the inner circumference side in the radial direction of the brake B1, and the automatic transmission can be made more compact.

### < Embodiment>

The embodiment of the invention, which is a partial modification of the first device will be described, with reference to Fig. 5 through Fig. 7. Fig. 5 is a schematic cross-sectional diagram illustrating the automatic transmission device of an automatic transmission relating to the embodiment, Fig. 6 is a operational table of an automatic transmission relating to the embodiment, and Fig. 7 is a speed line diagram of an automatic transmission relating to the embodiment. Now, components of the embodiment which are the same as those of the first device will be denoted with the same reference numerals, and description thereof omitted, except for partial modifications.

As Fig. 5 illustrates, the automatic transmission device 1₃ of the automatic transmission relating to the embodiment changes the configuration of the planetary gear PR, and further; configured a brake B3 (the first brake) in place of the clutch C3, and changed the carrier CR1 of the planetary gear PR so as to be capable of being fixed by the brake B3, as compared to that of the automatic transmission device 1₁ of the automatic transmission of the first embodiment (see Fig. 1).

The brake B3 is configured on the opposite side of the planetary gear unit PU (right side of diagram) of the planetary gear PR within this automatic transmission device 1₃. This brake B3 comprises an oil pressure servo 16, a friction plate 76, and a hub unit 33. Further, the brake B1 is configured on the outer circumference side of the brake B3.

The hub unit 33 of this brake B3 is connected to one side plate of the carrier CR1, and this carrier CR1 is supported by the input shaft 2 or the boss unit 3a so as to be capable of rotating. Further, the sun gear S1 is connected to the input shaft 2. Also, the friction plate 74 of the brake B1 is splined to the outer circumference side of the ring gear R1, and also this ring gear R1 is connected to the transmitting member 30, and the sun gear S3 is connected via this transmitting member 30. In other words, the ring gear R1 and the sun gear 53 are constantly in contact with one another, with no clutch located between for example, and the rotation can constantly be transmitted.

Continuing, based on the above-mentioned construction, the operations of the automatic transmission device 1₃ will be described, following Fig. 5, Fig. 6, and Fig. 7 below. Now, similar to the above-mentioned first embodiment, the vertical axis of the speed line diagram illustrated in Fig. 7 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 7) corresponds to sun gear S3, and hereafter moving to the left direction within the diagram, the vertical axis corresponds to the carrier CR2, the ring gear R3, and the sun gear S2. Further, regarding the planetary gear PR section of this speed line diagram, the vertical axis to the farthest horizontal edge (the right side of Fig. 7) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in a horizontal direction within the diagram illustrates that the rotation is transmitted from the transmitting member 30.

As illustrated in Fig. 5, the above-mentioned carrier CR1 is fixed to the case 3 by the brake B3 retaining. Further, the rotation of the input shaft 2 is input to the sun gear S1, the above-mentioned ring gear R1 decreases rotation speed based on the rotation of the input shaft 2 that is input to this sun gear S1, by this carrier CR1 being fixed. In other words, the reduced rotation of the ring gear R1 is input to the sun gear S3 via the transmitting member 30, by engaging the brake B3.

By doing so, as Fig. 6 and Fig. 7 illustrate, regarding the planetary gear PR, at third speed forward, fifth speed forward, and first speed reverse, the rotation of the input shaft 2 is input to the sun gear S1 by retaining the brake B3, the carrier CR1 is fixed, and the reduced rotation is output to the ring gear R3 by the rotation of the sun gear S1 wherein the rotation of the input shaft 2 is input, and the reduced rotation is input to the sun gear S3 via the transmitting member 30. In this case, the ring gear R1 and the sun gear S3 are rotating at reduced speed, therefore the above-mentioned transmitting member 30 performs a relatively large torque transmission. On the other hand, at first speed forward, second speed forward, fourth speed forward, and sixth speed forward, the rotation of the sun gear S3 is input to the ring gear R1 via the transmitting member 30, and further, because the brake B3 is released, as Fig. 7 illustrates, the carrier CR1 rotates based on each the rotation within the speed level of this ring gear R1 and the sun gear S1 of the rotation of the input shaft 2.

Now, the actions other than those of the above-mentioned planetary gear PR are similar to those of the above-described first device (see Fig. 2 and Fig. 3), and accordingly, description thereof will be omitted.

As described above, according to the automatic transmission device 1₃ relating to the present invention, the planetary gear PR and the brake B3 are configured on one side in the axial direction of the planetary gear unit PU, and the clutch C1 and the clutch C2 are configured on the other side in the axial direction of the planetary gear unit PU. Therefore, an automatic transmission can be provided that will achieve six forward speeds and one reverse speed, with direct coupling at fourth speed forward. For example, compared to the case wherein a clutch C1 or clutch C2 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can.be improved, and the occurrence of speed change shock can be reduced.

Further, because the oil pressure servo 11 is provided on the input shaft 2, one set of seal rings 82 seal the case 3 and supply oil to the oil lines 2b provided within input shaft 2, and therefore oil can be supplied to the oil compartment of oil pressure servos 11 without providing seal rings between, for example, the input shaft 2 and the oil pressure servos 11. Further, oil pressure servo 12 can supply oil from the boss unit 3b provided from the case 3, without passing through other units for example, in other words, can supply oil by providing one set of seal rings 83. Therefore, oil can be supplied simply by providing one set of seal rings 82, 83 each for the oil pressure servos 11, 12, and sliding resistance from the seal rings can be minimized, and therefore the efficiency of the automatic transmission can be improved.

Further, the clutch C1 is a clutch that engages at relatively slow to medium speed levels of first speed forward, second speed forward, third speed forward, and fourth speed forward, and therefore then this clutch C1 is released at fifth speed forward, sixth speed forward, or first speed reverse, which are relatively high speed levels, the hub unit 22 that connects in particular this clutch C1 and sun gear S2 rotates at a relatively high rotation or reverse rotation (see Fig. 7), and on the other hand the transmitting member 30 reduces speed rotation at fifth speed forward or first speed reverse, and there may be cases wherein the transmitting member is fixed at sixth speed forward, and the rotation difference between the hub unit 22 and the transmitting member 30 may become large. However, because this clutch C1 is located on the opposite side of the planetary gear PR via the planetary gear unit PU, the hub unit 22 and the transmitting member 30 can be configured apart, and compared with the case wherein for example those units are configured in contact with a multi-axial construction, the decreased efficiency of the automatic transmission resulting from the relative rotation occurring because of friction between those units can be prevented.

Further, due to the counter gear 5 being configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, because the reduced rotation output to the planetary gear unit PU from the planetary gear PR is engages and disengages by the brake B3, the number of parts (for example drum-shaped members and so forth) can be reduced compared to the case wherein, for example, a clutch C3 is provided. Further, the brake B3 can configure an oil line directly from the case 3, and therefore the construction of, an oil line can be simplified as compared to the case wherein, for example, a clutch C3 is provided.

Further, the automatic transmission device 1₃ according to the present embodiment is a transmission device that is directly coupled at fourth speed forward. Therefore, at fifth speed forward and sixth speed forward, the gear ratio can be specified at a high ratio, and particularly when mounted on a vehicle, in the event that the vehicle is running at a high speed, the engine revolutions can be lowered, and this contributes to the quietness of the vehicle while running at a high speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, this clutch or members that transmit the torque must be constructed so as to withstand this large torque. In other words, the number of friction members on a clutch must be increased, or the size thereof increased, or the oil pressure servo for pressurizing the friction member must be made larger. Further, since a brake must be configured to retain the rotation component of the planetary gear unit, this automatic transmission was insufficient with regard to being compact in size. Therefore, by constructing a compact clutch and brake in the area of the reducing planetary gear, it is an object of the present embodiment to provide an automatic transmission that solves the above-mentioned problems.

Therefore, according to the automatic transmission device 1₃ relating to the present embodiment, the carrier CR1 is fixed by the brake B3, and therefore, compared to the case wherein the clutch is located between the ring gear R1 and the sun gear S3 for example, the load on the brake B3 can be reduced, and the friction member of the brake B3 and the oil pressure servo can be made smaller. Therefore, these can be configured on the inner circumference side in the radial direction of the brake B1, and the automatic transmission can be made more compact.

### <Third device>

The third device, which is a partial modification of the first embodiment will be described, with reference to Fig. 8 through Fig. 10. Fig. 8 is a schematic cross-sectional diagram illustrating the automatic transmission device of an automatic transmission relating to the third device, Fig. 9 is a operational table of an automatic transmission relating to the third device, and Fig. 10 is a speed line diagram of an automatic transmission relating to the third device. Now, components of the third device which are the same as those of the first device will be denoted with the same reference numerals, and description thereof omitted, except for partial modifications.

As Fig. 8 illustrates, the automatic transmission device 1₄ of the automatic transmission relating to the third device changes the configuration of the planetary gear PR, compared to that of the automatic transmission device 1₁ of the automatic transmission of the first embodiment (see Fig. 1), and further, a brake B3 is configured, and rotation of the input shaft 2 is capable of being input to the sun gear S1 of the planetary gear PR by the clutch C3 and the carrier CR1 can be fixed by the brake B3.

The clutch C3 is configured on the planetary gear unit PU side (left side of diagram) of the planetary gear PR within this automatic transmission device 1₄, and the brake B3 is configured on the planetary gear PR on the opposite side (right side of diagram) from the planetary gear unit PU. The inner circumference side of the front edge of the drum-shaped member 25 of this clutch C3 is splined to the friction plate 73, and the inner circumference side of this friction plate 73 is splined to the hub unit 26. Further, the drum-shaped member 25 is connected to the input shaft 2, and the hub unit 26 is connected to the sun gear S1.

The brake B3 is configured on the opposite side of the planetary gear unit PU (right side of diagram) of the planetary gear PR. This brake B3 comprises an oil pressure servo 16, a friction plate 76, and a hub unit 33. The friction plate 76 is splined on the outer circumference side of the hub unit 33 of this brake B3, and the hub unit 33 is connected to one side plate of the carrier CR1, and this carrier CR1 is supported by the input shaft 2 or the boss unit 3a so as to freely rotate. Also, the friction plate 74 of the brake B1 is splined on the outer circumference side of the ring gear R1, and this ring gear R1 is connected to the transmitting member 30, and the sun gear S3 is connected via this transmitting member 30. In other words, the ring gear R1 and the sun gear S3 are constantly in contact with one another, with no clutch located between, and the rotation can constantly be transmitted.

Continuing, based on the above-mentioned construction, the operations of the automatic transmission device 1₄ will be described, following Fig. 8, Fig. 9, and Fig. 10 below. Now, similar to the above-mentioned first device, the vertical axis of the speed line diagram illustrated in Fig. 10 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 10) corresponds to sun gear S3, and hereafter moving to the left direction within the diagram, the vertical axis corresponds to the carrier CR2, the ring gear R3, and the sun gear S2. Further, regarding the planetary gear PR section of this speed line diagram, the vertical axis to the farthest horizontal edge (the right side of Fig. 10) corresponds to sun gear S1, and hereafter moving to the left direction within the diagram, the vertical axis corresponds to the ring gear R1 and the carrier CR1.
Further, the width between these vertical axes are proportional to the inverse of the number of teeth of each of the sun gears S1, S2, S3, and to the inverse of the number of teeth of each of the ring gears R1, R3. Also, the dotted line in a horizontal direction within the diagram illustrate that the rotation is transmitted from the transmitting member 30.

As Fig. 8 illustrates, the rotation of input shaft 2 is input to the above-mentioned sun gear S1 by engaging the clutch C3. Further, the rotation of the above-mentioned carrier CR1 is fixed to the case 3, by the brake B3 retaining. Therefore, when the clutch C3 engages.and the brake B3 retains, the above-mentioned ring gear R1 decreases rotation speed based on the rotation of input shaft 2 which is input to this sun gear S1. In other words, by engaging the clutch C3 and retaining with the brake B3, the reduced rotation of the ring gear R1 is input to the sun gear S3 via the transmitting member 30.

By doing so, as Fig. 9 and Fig. 10 illustrate, regarding the planetary gear PR, at third speed forward, fifth speed forward, and first speed reverse, the rotation of the input shaft 2 is input to the sun gear S1 by engaging the clutch C3, and further, the carrier CR1 is fixed by retaining the brake B3, and therefore the reduced rotation is output to the ring gear R3 by the fixed carrier CR1, and the reduced rotation is input to the sun gear S3 via the transmitting member 30. In this case, the ring gear R1 and the sun gear S3 are rotating at reduced speed, therefore the above-mentioned transmitting member 30 performs a relatively large torque transmission. On the other hand, at first speed forward, second speed forward, fourth speed forward, and sixth speed forward, the rotation of the sun gear S3 is input to the ring gear R1 via the transmitting member 30, but because the clutch C3 and the brake B3 are released, the carrier CR1 and the sun gear S1 rotate.

Now, the actions other than those of the above-mentioned planetary gear PR are similar to those of the above-described first device (see Fig. 2 and Fig. 3), and accordingly, description thereof will be omitted.

As described above, according to the automatic transmission device 1₄, the planetary gear PR, the clutch C3, and the brake B3 are configured on one side in the axial direction of the planetary gear unit PU, and the clutch C1 and the clutch C2 are configured on the other side in the axial direction of the planetary gear unit PU, therefore an automatic transmission can be provided that will achieve six forward speeds and one reverse speed with direct coupling at fourth speed forward. For example, compared to the case wherein a clutch C1 or clutch C2 is configured between the planetary gear PR and the planetary gear unit PU, the planetary gear PR and the planetary gear unit PU can be configured close together, and the transmitting member 30 for transmitting the reduced rotation can be made relatively short. Therefore, the automatic transmission can be made compact and lightweight, and further, because the inertia (force of inertia) can be reduced, the controllability of the automatic transmission can be improved, and the occurrence of speed change shock can be reduced.

Further, the clutch C3 is configured on one side in the axial direction of the planetary gear unit PU, and the clutch C1 and the clutch C2 are configured on the other side in the axial direction of the planetary gear unit PU, therefore compared to the case wherein the three clutches C1, C2, and C3 are configured on one side of the planetary gear unit PU for example, the construction of an oil line (for example, 2a, 2b, 92, 93, 94) to provide oil to the oil pressure servos 11, 12, and 13 for these clutches C1, C2, C3 can be made easily, and the manufacturing process can be simplified and the costs brought down.

Further, because the oil pressure servos 11 and 13 are provided on the input shaft 2, one set of seal rings 81 and 82 seal the case 3 and supply oil to the oil lines 2a, and 2b provided within input shaft 2, and therefore oil can be supplied to the oil compartment of oil pressure servos 11 and 13 without providing seal rings between, for example, the input shaft 2 and the oil pressure servos 11 and 13. Further, the oil pressure servo 12 can supply oil from the boss unit 3b provided from the case 3, without passing through other units for example, in other words, can supply oil by providing one set of seal rings 83. Therefore, oil can be supplied simply by providing one set of seal rings 81 and 82, 83 each for the oil pressure servos 11, 12, and 13, and sliding resistance from the seal rings can be minimized, and therefore the efficiency of the automatic transmission can be improved.

Further, the clutch C1 is a clutch that engages at relatively slow to medium speed levels of first speed forward, second speed forward, third speed forward, and fourth speed forward, and therefore then this clutch C1 is released at fifth speed forward, sixth speed forward, or first speed reverse, which are relatively high speed levels, the hub unit 22 that connects in particular this clutch C1 and sun gear S2 rotates at a relatively high rotation or reverse rotation (see Fig. 3), and on the other hand the transmitting member 30 reduces speed rotation at fifth speed forward or first speed reverse, and there may be cases wherein the transmitting member is fixed at sixth speed forward, and the rotation difference between the hub unit 22 and the transmitting member 30 may become large. However, because this clutch C1 is located on the opposite side of the planetary gear PR via the planetary gear unit PU, the hub unit 22 and the transmitting member 30 can be configured apart, and compared with the case wherein for example those units.are configured in contact with a multi-axial construction, the decreased efficiency of the automatic transmission resulting from the relative rotation occurring because of friction between those units can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission mechanism. Because of this, particularly in the case of an FF vehicle, the interference toward the front wheels is reduced, and the mountability on a vehicle can be improved, such the steering angle being greatly improved, for example.

Further, in the event that the oil pressure servo 13 is configured adjoined to the planetary gear PR for example, and the hub unit 26 is made to be the cylinder unit for the oil pressure servo 13, the necessity arises to provide one set of seal rings between the hub unit 26 and the input shaft 2. However, the oil pressure servo 13 of the clutch C3 is configured on the opposite side of the friction plate 73 from the planetary gear PR in the axial direction, therefore seal rings are not provided, in other words, the number of seal rings can be reduced, sliding resistance can be reduced, and by doing so, the efficiency of the automatic transmission can be improved.

Further, the automatic transmission device 1₄ is a transmission device that is directly coupled at fourth speed forward. Therefore, at fifth speed forward and sixth speed forward, the gear ratio can be specified at a high ratio, and particularly when mounted on a vehicle, in the event that the vehicle is running at a high speed, the engine revolutions can be lowered, and this contributes to the quietness of the vehicle while running at a high speed.

In order to solve the above-described problems, proposals have been made such as those in Japanese Unexamined Patent Application Publication No. 8-68456. However, the product in this Publication has a construction wherein a clutch is configured on the line that transmits the reduced rotation of the reducing planetary gear to the rotation component of the planetary gear unit, and because the line that transmits this reduced rotation is a line wherein a large torque is input, the clutch or members that transmit the torque must be constructed so as to withstand this large torque. In other words, the number of friction members on a clutch must be increased, or the size thereof increased, or the oil pressure servo for pressurizing the friction member must be made larger. Further, because a brake must be configured to retain the rotation component of the planetary gear unit, this automatic transmission was insufficient with regard to being compact in size. Therefore, by constructing a compact.clutch and brake in the area of the reducing planetary gear, it is an object of the present embodiment to provide an automatic transmission that solves the above-mentioned problems.

Therefore, according to the automatic transmission device 1₄, the clutch C3 is located between the input shaft 2 and the sun gear S1, and therefore, compared to the case wherein the clutch C3 is located for example between the ring gear R1 and the sun gear S3, the burden on the clutch C3 can be decreased, and the clutch C3 can be made more compact. Further, because the friction member and oil pressure servo of the clutch C3 can be made smaller, they can be configured on the inner circumference side in the radial direction of the brake B1, and the automatic transmission can be made more compact.

Now, the above embodiment relating to the present invention has been described as being applicable to an automatic transmission having a torque converter, but should not be limited to this, and any motion starting device may be used that would transmit the torque (rotation) at start of movement. Further, a case wherein this is.mounted on a vehicle with an engine as a drive source has been described, but should not be limited to this, any drive source may be used as a matter of course, and this may be mounted on a hybrid vehicle. Further, the above-mentioned automatic transmission is favorable for use in a FF vehicle, but should not be limited to this, and can be used in a FR vehicle, a four-wheel drive vehicle, or vehicles with other types of drive systems.

' Further, the reducing planetary gear according to the above embodiment has been described as one that reduces rotation speed of the ring gear by fixing the carrier while inputting the rotation of the input shaft into the sun gear, but should not be limited to this, and may reduce rotation speed of the ring gear by fixing the sun gear while inputting the rotation of the input shaft into the carrier.

### Industrial Applicability

As described above, the automatic transmission according to the present invention is beneficial mounted on vehicles such as automobiles, trucks, busses, and so forth, and is particularly suitable for use with vehicles which require reduction in size and reduction in weight from mountability to the vehicle, and further require reduction in shock of changing speeds.

## Claims

1. An automatic transmission comprising:
an input shaft (2) that rotates based on the output rotation of a drive source;
a reducing planetary gear (PR) comprising an input rotation component (S1) that can constantly input the rotation of said input shaft (2), a rotation fixing component(CR1) that fixes the rotation, a reduced rotation component (R1) that can reduce rotation speed based on the rotation of the input rotation component (S1) and the rotation fixing component (CR1);
a first brake (B3) capable of fixing said rotation fixing component (CR1);
a planetary gear unit (PU) comprising a first rotation component (S3) for constantly receiving as input the reduced rotation of said reduced rotation component (R1), a second rotation component (S2) and a third rotation component (CR2) and a fourth rotation component (R3);
a second brake (B1) capable of fixing said first rotation component (S3) wherein said reduced rotation is input to the first rotation component (S3), and wherein said first brake (B3) is configured in a location so as to wrap in the radial direction on the inner circumference side of said second brake (B1);
a first clutch (C1) for linking said input shaft (2) and said second rotation component (S2) so as to be capable of disengaging;
a second clutch (C2) for linking said input shaft (2) and said third rotation component (CR2) so as to be capable of disengaging; and
an output member (5) for outputting the rotation of said fourth rotation component (R3) into the drive wheel transmitting device (30), wherein;
at least five forward speeds and one reverse speed can be achieved, and said first clutch (C1) and said second clutch (C2) can be engaged together while at fourth speed forward;
and wherein said planetary gear (PR) and said first brake (B3) are configured on one side in the axial direction of said planetary gear unit (PU); **characterized in that**
said first clutch (C1) and said second clutch (C2) are configured on the other side in the axial direction of said planetary gear unit (PU) opposite the planetary gear (PR);
and wherein said output member (5) is disposed between said planetary gear unit (PU) and said reducing planetary gear (PR) and said first brake (B3).

2. An automatic transmission according to Claim 1,
wherein said first clutch (C1) and said second clutch (C2) each comprise a friction member (71, 72) and an oil pressure servo (11, 12) for pressing said friction member (71, 72);
and wherein the oil pressure servo (11, 12) of said first clutch (C1) and said second clutch (C2)are configured on the opposite side in the axial direction of said planetary gear (PU) from said Reducing planetary gear (PR).

3. An automatic transmission according to Claim 1 or 2, wherein an oil pressure servo (16) of said first brake (B3) is provided to the case (3).

4. An automatic transmission according to any one of the Claims 1, 2or 3,;
wherein said first brake (B3) and said second brake (B1) each comprise a friction member (76, 74) and an oil pressure servo (16, 14) for pressing said friction member (76, 74);
and wherein the oil pressure servo (16) of said first brake (B3) is configured on the inner circumference side in the radial direction of the oil pressure servo (14) of said second brake (B1), and the friction member (76) of said first brake (B3) meshes with a member extended from between the oil pressure servo (16) of said first brake (B3) and the oil pressure servo (14) of said second brake (B1).

5. An automatic transmission according to any one of the Claims 1 through 4, wherein said first clutch (C1) comprises a friction member (71), an oil pressure servo (11) that pressurizes this friction member (71), a drum unit (21) that is constructed integrally with said oil pressure servo (11), and a hub unit (22);
and wherein said drum unit (21) is linked with said input shaft (2), and said hub unit (22) is linked with said second rotation component.

6. An automatic transmission according to any one of the Claims 1 through 5, wherein a linking member (27) that links the reduced rotation component (R1) of said reducing planetary gear (PR) and the first rotation component (S3) of said planetary gear unit (PU), are mutually linked passing through the inner circumference of said output member (5).

7. An automatic transmission according to any one of the Claims 1 through 6, further comprising a differential unit for outputting rotations to driving wheels, and a counter shaft unit for engaging said differential unit, wherein said output member (5) is a counter gear meshing with said counter shaft unit.

8. An automatic transmission according to any one of the Claims 1 through 7, wherein, in a speed line chart illustrating the revolutions of said first, second, third, and fourth rotation components (S3, S2, CR2, R3) with the vertical axis, and the gear ratio of said first, second, third, and fourth rotation components (S3, S2, CR2, R3) with the horizontal axis in a corresponding manner;
said first rotation component (S3) to which said reduced rotation is input is positioned at the farthest edge in the horizontal direction, with said third rotation component (CR2), said fourth rotation component (R3) linked to said output member (5), and said second rotation component (S2), corresponding in that order.

9. An automatic transmission according to one of the Claims 1 through 8, wherein said planetary gear unit (PU) is a multiple type planetary gear, comprising a first sun gear (S3), a long pinion (PL) which meshes with said first sun gear (S3), a short pinion (PS) which meshes with said long pinion (PL), a carrier (CR2) for rotationally supporting said long pinion (PL) and said short pinion (PS), a second sun gear (S2) meshing with said short pinion (PS), and a ring gear (R3) meshing with said long pinion (PL);
wherein said first rotation component (S3) is said first sun gear capable of receiving input of the reduced rotation of said reduced rotation component (R1), and which is capable of being fixed by the retaining of said second brake (B1);
and wherein said second rotation component (S2) is said second sun gear capable of inputting rotations of said input shaft (2) by the engaging of said first clutch (C1);
and wherein said third rotation component (CR2) is said carrier capable of inputting the rotations of said input shaft (2) by the engaging of said second clutch (C2), and which is capable of being fixed by the retaining of a third brake (B2);
and wherein said fourth rotation component (R3) is said ring gear linked to said output member (5).

10. An automatic transmission according to Claim 9, wherein, in the first speed forward, said first clutch (C1) is engaged and said third brake (B2) is retained;
and wherein, in the second speed forward, said first clutch (C1) is engaged and said second brake (B1) is retained;
and wherein, in the third speed forward, reduced rotation is input to said first rotation component (S3) from said reduced rotation component (R1), and said first clutch (C1) is engaged;
and wherein, in the fourth speed forward, said first clutch (C1) and said second clutch (C2) are both engaged;
and wherein, in the fifth speed forward, reduced rotation is input to said first rotation component (S3) from said reduced rotation component(R1), and said second clutch (C2) is engaged;
and wherein, in the sixth speed forward, said second clutch (C2) is engaged and said second brake (B1) is retained;
and wherein, in the first speed reverse, reduced rotation is input to said first rotation component (S3) from said reduced rotation component(R1), and said third brake (B2) is retained;
whereby six forward speed levels and one reverse speed level can be achieved.

## Patentansprüche

1. Automatisches Getriebe mit:
einer sich basierend auf der Ausgangsdrehbewegung einer Antriebsquelle drehenden Eingangswelle (2);
einem Untersetzungsplanetengetriebe (PR) mit einer Eingangsdrehkomponente (S 1), über die die Drehbewegung der Eingangswelle (2) permanent zugeführt werden kann, einer Drehbewegungsfixierungskomponente (CR1) zum Fixieren der Drehbewegung, einer Drehzahlminderungskomponente (R1), die dazu geeignet ist, die Drehzahl basierend auf der Drehbewegung der Eingangsdrehkomponente (S1) und der Drehbewegungsfixierungskomponente (CR1) zu vermindern;
einer ersten Bremse (B3), die dazu geeignet ist, die Drehbewegungsfixierungskomponente (CR1) zu fixieren;
einer Planetengetriebeeinheit (PU) mit einer ersten Drehkomponente (S3), der als Eingangsdrehbewegung die Drehbewegung mit einer verminderten Drehzahl von der Drehzahlminderungskomponente (R1) permanent zugeführt wird, einer zweiten Drehkomponente (S2), einer dritten Drehkomponente (CR2) und einer vierten Drehkomponente (R3);
einer zweiten Bremse (B 1), die dazu geeignet ist, die erste Drehkomponente (S3) zu fixieren, wobei der ersten Drehkomponente (S3) die Drehbewegung mit einer verminderten Drehzahl zugeführt wird, und wobei die erste Bremse (B3) in der radialen Richtung auf der Innenumfangsseite der zweiten Bremse (B1) angeordnet ist;
einer ersten Kupplung (C1) zum ausrückbaren Verbinden der Eingangswelle (2) mit der zweiten Drehkomponente (S2);
einer zweiten Kupplung (C2) zum ausrückbaren Verbinden der Eingangswelle (2) mit der dritten Drehkomponente (CR2);
einem Abtriebselement (5) zum Ausgeben der Drehbewegung der vierten Drehkomponente (R3) an eine Antriebsradkraftübertragungseinrichtung (30), wobei:
mindestens fünf Vorwärtsgangstufen und eine Rückwärtsgangstufe einstellbar sind, und wobei die erste Kupplung (C1) und die zweite Kupplung (C2) in der vierten Vorwärtsgangstufe zusammen eingerückt werden können; und
wobei das Planetengetriebe (PR) und die erste Bremse (B3) in der axialen Richtung der Planetengetriebeeinheit (PU) auf einer Seite angeordnet sind;
**dadurch gekennzeichnet, dass**
die erste Kupplung (C1) und die zweite Kupplung (C2) in der axialen Richtung der Planetengetriebeeinheit (PU) auf der anderen Seite gegenüberliegend dem Planetengetriebe (PR) angeordnet sind; und
das Abtriebselement (5) zwischen der Planetengetriebeeinheit (PU) und dem Untersetzungsplanetengetriebe (PR) und der ersten Bremse (B3) angeordnet ist.

2. Automatisches Getriebe nach Anspruch 1,
wobei die erste Kupplung (C1) und die zweite Kupplung (C2) jeweils ein Reibungselement (71, 72) und eine Öldruck-Servoeinrichtung (11, 12) zum Drücken des Reibungselements (71, 72) aufweisen, und
wobei die Öldruck-Servoeinrichtung (11, 12) der ersten Kupplung (C1) und der zweiten Kupplung (C2) in der axialen Richtung der Planetengetriebeeinheit (PU) auf der dem Untersetzungsplanetengetriebe (PR) gegenüberliegenden Seite angeordnet ist.

3. Automatisches Getriebe nach Anspruch 1 oder 2, wobei eine Öldruck-Servoeinrichtung (16) der ersten Bremse (B3) am Gehäuse (3) ausgebildet ist.

4. Automatisches Getriebe nach einem der Ansprüche 1, 2 oder 3,
wobei die erste Bremse (B3) und die zweite Bremse (B1) jeweils ein Reibungselement (76, 74) und eine Öldruck-Servoeinrichtung (16, 14) zum Drücken des Reibungselements (76, 74) aufweisen, und
wobei die Öldruck-Servoeinrichtung (16) der ersten Bremse (B3) auf der Innenurnfangsseite in der radialen Richtung der Öldruck-Servoeinrichtung (14) der zweiten Bremse (B1) angeordnet ist, und wobei das Reibungselement (76) der ersten Bremse (B3) mit einem Element kämmt, das sich zwischen der Öldruck-Servoeinrichtung (16) der ersten Bremse (B3) und der Öldruck-Servoeinrichtung (14) der zweiten Bremse (B1) erstreckt.

5. Automatisches Getriebe nach einem der Ansprüche 1 bis 4, wobei die erste Kupplung (C1) ein Reibungselement (71), eine Öldruck-Servoeinrichtung (11), die dieses Reibungselement (71) drückt, eine integral mit der Öldruck-Servoeinrichtung (11) ausgebildete Trommeleinheit (21) und eine Nabeneinheit (22) aufweist, und
wobei die Trommeleinheit (21) mit der Eingangswelle (2) verbunden ist und die Nabeneinheit (22) mit der zweiten Drehkomponente verbunden ist.

6. Automatisches Getriebe nach einem der Ansprüche 1 bis 5, wobei ein Verbindungselement (27) die Drehzahlminderungskomponente (R1) des Untersetzungsplanetengetriebes (PR) und die erste Drehkomponente (S3) der Planetengetriebeeinheit (PU) über den Innenumfang des Abtriebselements (5) wechselseitig verbindet.

7. Automatikgetriebe nach einem der Ansprüche 1 bis 6, ferner mit einer Differentialeinheit zum Ausgeben von Drehbewegungen an Antriebsräder, und mit einer Vorgelegewelleneinheit, die dazu geeignet ist, mit der Differentialeinheit in Eingriff zu kommen, wobei das Abtriebselement (5) ein mit der Vorgelegewelleneinheit kämmendes Gegenzahnrad ist.

8. Automatisches Getriebe nach einem der Ansprüche 1 bis 7, wobei in einem Drehzahldiagramm, das die Drehzahlen der ersten, der zweiten, der dritten und der vierten Drehkomponente (S3, S2, CR2, R3) auf der vertikalen Achse und das Übersetzungsverhältnis der ersten, der zweiten, der dritten und der vierten Drehkomponente (S3, S2, CR2, R3) auf der horizontalen Achse in Zuordnung zueinander darstellt,
die erste Drehkomponente (S3), der die Drehbewegung mit einer verminderten Drehzahl zugeführt wird, in der horizontalen Richtung am äußersten Rand angeordnet ist, während die dritte Drehkomponente (CR2), die mit dem Abtriebselement (5) verbundene vierte Drehkomponente (R3) und die zweite Drehkomponente (S2) im Drehzahldiagramm in dieser Folge bezüglich der ersten Drehkomponente angeordnet sind.

9. Automatisches Getriebe nach einem der Ansprüche 1 bis 8, wobei die Planetengetriebeeinheit (PU) ein Mehrfach-Planetengetriebe mit einem ersten Sonnenrad (S3), einem mit dem ersten Sonnenrad (S3) kämmenden Langritzel (PL), einem mit dem Langritzel (PL) kämmenden Kurzritzel (PS), einem Träger (CR2) zum drehbaren Halten des Langritzels (PL) und des Kurzritzels (PS), einem mit dem Kurzritzel (PS) kämmenden zweiten Sonnenrad (S2) und einem mit dem Langritzel (PL) kämmenden Hohlrad (R3) ist,
wobei die erste Drehkomponente (S3) das erste Sonnenrad ist, das dazu geeignet ist, die Drehbewegung mit einer verminderten Drehzahl von der Drehzahlminderungskomponente (R1) zu empfangen, und dazu geeignet ist, durch Feststellen der zweiten Bremse (B 1) fixiert zu werden,
wobei die zweite Drehkomponente (S2) das zweite Sonnenrad ist, dem durch Einrücken der ersten Kupplung (C1) Drehbewegungen der Eingangswelle (2) zugeführt werden können,
wobei die dritte Drehkomponente (CR2) der Träger ist, dem durch Einrücken der zweiten Kupplung (C2) die Drehbewegungen der Eingangswelle (2) zugeführt werden können, und die dazu geeignet ist, durch Feststellen einer dritten Bremse (B2) fixiert zu werden; und
wobei die vierte Drehkomponente (R3) das mit dem Abtriebselement (5) verbundene Hohlrad ist.

10. Automatisches Getriebe nach Anspruch 9, wobei in der ersten Vorwärtsgangstufe die erste Kupplung (C1) eingerückt und die dritte Bremse (B2) festgestellt ist,
wobei in der zweiten Vorwärtsgangstufe die erste Kupplung (C1) eingerückt und die zweite Bremse (B 1) festgestellt ist,
wobei in der dritten Vorwärtsgangstufe der ersten Drehkomponente (S3) eine Drehbewegung mit einer verminderten Drehzahl von der Drehzahlminderungskomponente (R1) zugeführt wird und die erste Kupplung (C1) eingerückt ist,
wobei in der vierten Vorwärtsgangstufe die erste Kupplung (C1) und die zweite Kupplung (C2) eingerückt sind,
wobei in der fünften Vorwärtsgangstufe der ersten Drehkomponente (S3) eine Drehbewegung mit einer verminderten Drehzahl von der Drehzahlminderungskomponente (R1) zugeführt wird und die zweite Kupplung (C2) eingerückt ist,
wobei in der sechsten Vorwärtsgangstufe die zweite Kupplung (C2) eingerückt und die zweite Bremse (B 1) festgestellt ist, und
wobei in der ersten Rückwärtsgangstufe der ersten Drehkomponente (S3) eine Drehbewegung mit einer verminderten Drehzahl von der Drehzahlminderungskomponente (R1) zugeführt wird und die dritte Bremse (B2) festgestellt ist,
wodurch sechs Vorwärtsgangstufen und eine Rückwärtsgangstufe einstellbar sind.

## Revendications

1. Transmission automatique comprenant :
un arbre d'entrée (2) qui tourne sur la base de la rotation de sortie d'une source d'entraînement ;
un engrenage planétaire de réduction (PR) comprenant un composant rotatif d'entrée (S1) qui peut entrer constamment la rotation dudit arbre d'entrée (2), un composant de fixation de rotation (CR1) qui fixe la rotation, un composant à rotation réduite (R1) qui peut réduire la vitesse de rotation en se basant sur la rotation du composant rotatif d'entrée (S1) et du composant de fixation de rotation (CR1) ;
un premier frein (B3) capable de fixer ledit composant de fixation de rotation (CR1) ;
une unité (PU) formant engrenage planétaire comprenant un premier composant rotatif (S3) destiné à recevoir constamment comme entrée la rotation réduite dudit composant à rotation réduite (R1), un deuxième composant rotatif (S2) et un troisième composant rotatif (CR2) et un quatrième composant rotatif (R3) ;
un deuxième frein (B1) capable de fixer ledit premier composant rotatif (S3) dans laquelle ladite rotation réduite est entrée sur le premier composant rotatif (S3), et dans laquelle ledit premier frein (B3) est constitué dans un emplacement de façon à s'enrouler dans la direction radiale sur le côté circonférentiel intérieur dudit deuxième frein (B1) ;
un premier embrayage (C1) destiné à lier ledit arbre d'entrée (2) et ledit deuxième composant rotatif (S2) de façon à être capable de les débrayer ;
un second embrayage (C2) destiné à lier ledit arbre d'entrée (2) et ledit troisième composant rotatif (CR2) de façon à être capable de les débrayer ; et
un organe de sortie (5) destiné à sortir la rotation dudit quatrième composant rotatif (R3) pour l'entrer dans le dispositif (30) de transmission des roues motrices,
dans laquelle on peut obtenir au moins cinq vitesses de marche avant et une vitesse de marche arrière, et ledit premier embrayage (C1) et ledit second embrayage (C2) peuvent être embrayés ensemble lorsque l'on est en quatrième vitesse de marche avant,
et dans laquelle ledit engrenage planétaire (PR) et ledit premier frein (B3) sont constitués sur un côté dans la direction axiale de ladite unité (PU) formant engrenage planétaire,
**caractérisée en ce que** ledit premier embrayage (C1) et ledit second embrayage (C2) sont constitués sur l'autre côté dans la direction axiale de ladite unité (PU) formant engrenage planétaire opposé à l'engrenage planétaire (PR),
et dans laquelle ledit organe de sortie (5) est disposé entre ladite unité (PU) formant engrenage planétaire et ledit engrenage planétaire de réduction (PR) et ledit premier frein (B3).

2. Transmission automatique selon la revendication 1,
dans laquelle ledit premier embrayage (C1) et ledit second embrayage (C2) comprennent chacun un organe à friction (71, 72) et une servocommande (11, 12) à pression d'huile destinée à presser ledit organe à friction (71, 72),
et dans laquelle les servocommandes (11, 12) à pression d'huile dudit premier embrayage (C1) et dudit second embrayage (C2) sont constituées sur le côté opposé dans la direction axiale dudit engrenage planétaire (PU) par rapport audit engrenage planétaire de réduction (PR).

3. Transmission automatique selon la revendication 1 ou 2, dans laquelle une servocommande (16) à pression d'huile dudit premier frein (B3) est prévue au niveau du carter (3).

4. Transmission automatique selon l'une quelconque des revendications 1, 2 ou 3,
dans laquelle ledit premier frein (B3) et ledit deuxième frein (B1) comprennent chacun un organe à friction (76, 74) et une servocommande (16, 14) à pression d'huile destinée à presser ledit organe à friction (76, 74),
et dans laquelle la servocommande (16) à pression d'huile dudit premier frein (B3) et constituée sur le côté circonférentiel intérieur dans la direction radiale de la servocommande (14) à pression d'huile dudit deuxième frein (B1), et l'organe à friction (76) dudit premier frein (B3) est en prise avec un organe s'étendant à partir d'un emplacement entre la servocommande (16) à pression d'huile dudit premier frein (B3) et la servocommande (14) à pression d'huile dudit deuxième frein (B1).

5. Transmission automatique selon l'une quelconque des revendications 1 à 4, dans laquelle ledit premier embrayage (C1) comprend un organe à friction (71), une servocommande (11) à pression d'huile qui presse cet organe à friction (71), une unité formant tambour (21) qui est constituée d'un seul tenant avec ladite servocommande (11) à pression d'huile, et une unité formant moyeu (22),
et dans laquelle ladite unité formant tambour (21) est liée audit arbre d'entrée (2), et ladite unité formant moyeu (22) est liée audit second composant rotatif.

6. Transmission automatique selon l'une quelconque des revendications 1 à 5, dans laquelle un organe de liaison (27) qui relie le composant à rotation réduite (R1) dudit engrenage planétaire de réduction (PR) et le premier composant rotatif (S3) de ladite unité (PU) formant engrenage planétaire, sont liés mutuellement en passant par la circonférence intérieure dudit organe de sortie (5).

7. Transmission automatique selon l'une quelconque des revendications 1 à 6, comprenant en outre une unité formant différentiel destinée à sortir les rotations vers les roues motrices, et une unité formant arbre de renvoi destiné à être en prise avec ladite unité formant différentiel, dans laquelle ledit organe de sortie (5) est un engrenage de renvoi engrenant avec ladite unité formant arbre de renvoi.

8. Transmission automatique selon l'une quelconque des revendications 1 à 7, dans laquelle, sur un graphique de courbes de vitesse représentant, sur l'axe vertical, les nombres de tours desdits premier, deuxième, troisième et quatrième composants rotatifs (S3, S2, CR2, R3), et, sur l'axe horizontal de manière correspondante, les rapports de démultiplication desdits premier, deuxième, troisième et quatrième composants rotatifs (S3, S2, CR2, R3),
ledit premier composant rotatif (S3) sur lequel entre ladite rotation réduite est situé au niveau du bord le plus éloigné dans la direction horizontale, avec ledit troisième composant rotatif (CR2), ledit quatrième composant rotatif (R3) lié audit organe de sortie (5), et ledit deuxième composant rotatif (S2), correspondant dans cet ordre.

9. Transmission automatique selon l'une des revendications 1 à 8, dans laquelle ladite unité (PU) formant engrenage planétaire est un engrenage planétaire du type multiple, comprenant une première roue solaire (S3), un pignon long (PL) qui engrène avec ladite première roue solaire (S3), un pignon court (PS) qui engrène avec ledit pignon long (PL), un support (CR2) destiné à supporter de façon mobile en rotation ledit pignon long (PL) et ledit pignon court (PS), une seconde roue solaire (S2) engrenant avec ledit pignon court (PS) et un engrenage annulaire (R3) engrenant avec ledit pignon long (PL),
dans laquelle ledit premier composant rotatif (S3) est ladite première roue solaire capable de recevoir l'entrée de la rotation réduite dudit composant à rotation réduite (R1), et qui est capable d'être fixée par le maintien dudit deuxième frein (B1),
et dans laquelle ledit deuxième composant rotatif (S2) est ladite seconde roue solaire capable d'entrer les rotations dudit arbre d'entrée (2) par l'embrayage dudit premier embrayage (C1),
et dans laquelle ledit troisième composant rotatif (CR2) est ledit support capable d'entrer les rotations dudit arbre d'entrée (2) par l'embrayage dudit second embrayage (C2), et qui est capable d'être fixé par le maintien d'un troisième frein (B2),
et dans laquelle ledit quatrième composant rotatif (R3) est ledit engrenage annulaire lié audit organe de sortie (5).

10. Transmission automatique selon la revendication 9,
dans laquelle, en première vitesse de marche avant, ledit premier embrayage (C1) est embrayé et ledit troisième frein (B2) est maintenu,
et dans laquelle, en deuxième vitesse de marche avant, ledit premier embrayage (C1) est embrayé et ledit deuxième frein (B1) est maintenu,
et dans laquelle, en troisième vitesse de marche avant, la rotation réduite est entrée sur ledit premier composant rotatif (S3) à partir dudit composant à rotation réduite (R1), et ledit premier embrayage (C1) est embrayé,
et dans laquelle, en quatrième vitesse de marche avant, ledit premier embrayage (C1) et ledit second embrayage (C2) sont tous les deux embrayés,
et dans laquelle, en cinquième vitesse de marche avant, la rotation réduite est entrée sur ledit premier composant rotatif (S3) à partir dudit composant à rotation réduite (R1), et ledit second embrayage (C2) est embrayé,
et dans laquelle, en sixième vitesse de marche avant, ledit second embrayage (C2) est embrayé et ledit deuxième frein (B1) est maintenu,
et dans laquelle, en première vitesse de marche arrière, la rotation réduite est entrée sur ledit premier composant rotatif (S3) à partir dudit composant à rotation réduite (R1), et ledit troisième frein (B2) est maintenu,
ce par quoi l'on peut obtenir six niveaux de vitesse de marche avant et un niveau de vitesse de marche arrière.
